# EUROPÄISCHE PATENTANMELDUNG

(11) **EP 0 548 693 A1**
(43) Veröffentlichungstag der Anmeldung: **30.06.1993**
(21) Anmeldenummer: 92121079.5
(22) Anmeldetag: 10.12.1992
(51) Int. Cl.: B29C 45/67, B29C 45/04, B29C 45/17

(54) **Anlage zum Spritzgiessen von Kunststoffmaterial**

(30) Priorität: 20.12.1991 DE 4142230
(71) Anmelder: Battenfeld Kunststoffmaschinen Ges.m.b.H., A-2542 Kottingbrunn (AT)
(72) Erfinder: Heindl, Friedrich, Ing., A-2500 Baden (AT)
(74) Vertreter: Müller, Gerd, Dipl.-Ing.

(57) **Zusammenfassung**

Vorgeschlagen wird eine Spritzgießanlage (1) für Kunststoffmaterial, bei der ein Spritzaggregat bzw. eine Plastifiziereinheit (2) an ein Formwerkzeug (3) anlegbar ist, dessen Formhöhlung (7) zwischen mindestens zwei Formwerkzeugteilen (5) und (6) eingegrenzt ist, die öffen- und schließbar in einer Schließvorrichtung (4) sitzen, welche von einer ortsfesten bzw. stationären Werkzeugträgerplatte (10) und einer beweglichen Werkzeugträgerplatte (11) gebildet ist, die zur Schließkrafterzeugung durch Kraftantrieb (10) gegeneinander verspannbar sind. Zur Schaffung eines flexiblen Aufbaus der Spritzgießanlage (1) ist die Schließvorrichtung (4) einerseits relativ zum Spritzaggregat bzw. zur Plastifiziereinheit (2) sowie andererseits in sich selbst modular ausgebildet bzw. ausgelegt. Dies in der Weise, daß die Schließvorrichtung (4) aus einem Schließmodul (8) und einem Hubmodul (9) besteht, die miteinander in lösbare Verbindung bringbar sind.

## Beschreibung

Die Erfindung betrifft eine Anlage zum Spritzgießen von Kunststoffmaterial, bei der ein Spritzaggregat bzw. eine Plastifiziereinheit an ein Formwerkzeug anlegbar ist, dessen Formhöhlung zwischen mindestens zwei Formwerkzeugteilen eingegrenzt ist, die öffen- und schließbar in einer Schließvorrichtung sitzen, welche von einer ortsfesten bzw. stationären Werkzeugträgerplatte und einer beweglichen Werkzeugträgerplatte gebildet ist, die zur Schließkrafterzeugung durch Kraftantriebe gegeneinander verspannbar sind.

Herkömmlicherweise arbeiten Spritzgießmaschinen mit Formwerkzeugen zusammen, die in eine Schließvorrichtung eingebaut werden, an welche sich die Spritzgießmaschine im Bereich einer ortsfesten Formträgerplatte anschließt. Außer der ortsfesten Formträgerplatte weist dabei die Schließvorrichtung noch eine mit dieser über vier Holme verbundene stationäre Widerlagerplatte sowie eine längs der Holme verschiebbare Formträgerplatte auf, wobei an der letzteren wiederum ein Bewegungs- und Kraftmechanismus, bspw. in Form eines hydraulischen Zylinders, eines Druckkissens oder auch eines Kniehebels, angreift, welcher an der ortsfesten Widerlagerplatte abgestützt ist.

Zwischen der ortsfesten Formträgerplatte und der beweglichen Formträgerplatte wirkt die Schließkraft auf das Formwerkzeug ein, welches in der Regel aus zwei Formwerkzeugteilen bzw. -hälften besteht.

Bekanntermaßen werden das Spritzaggregat bzw. die Plastifiziereinheit einer Spritzgießmaschine und die auch als Schließeinheit bezeichnete Schließvorrichtung für das mit der Spritzgießmaschine zusammenarbeitende Formwerkzeug auf einem gemeinsamen Bett oder Gestell montiert, um eine funktionsfähige Spritzgießanlage zu erhalten.

Bei derartigen Spritzgießanlagen wird es als nachteilig empfunden, daß die zur Aufnahme der Formwerkzeuge erforderlichen Schließvorrichtungen bzw. Schließeinheiten von der Baugröße her relativ eng an den jeweiligen Einsatzbereich angepaßt werden müssen und sich daher nicht genügend flexibel auf unterschiedliche Bedarfsfälle abstimmen lassen.

Bei herkömmlichen Spritzgießanlagen ist es daher praktisch unmöglich, mit erträglichem technischen Aufwand Schließvorrichtungen bzw. Schließeinheiten zu erstellen, mit deren Hilfe einerseits große Öffnungs- und Schließhübe bei geringer Schließkraft und andererseits kurze Öffnungs- und Schließhübe bei großer Schließkraft hervorgebracht werden können.

Der Erfindung ist deshalb die Aufgabe gestellt, eine gattungsgemäße Anlage zum Spritzgießen von Kunststoffmaterial aufzuzeigen, die in ihrem Aufbau variabel und anpassungsfähig ist und sich daher relativ einfach auf unterschiedliche Bedürfnisse abstimmen läßt.

Erreicht wird dieses Ziel erfindungsgemäß im wesentlichen dadurch, daß die Schließvorrichtung einerseits relativ zum Spritzaggregat bzw. zur Plastifiziereinheit sowie andererseits in sich selbst eine modulare Ausbildung bzw. Auslegung aufweist und daß dabei die Schließvorrichtung aus einem Schließmodul und einem Hubmodul besteht, die miteinander in lösbare Verbindung bringbar sind.

Hieraus resultiert die besonders vorteilhafte Möglichkeit der Erfindung, daß sowohl der Schließmodul als auch der Hubmodul der Schließvorrichtung jeweils mit einer Werkzeugträgerplatte versehen und/oder mit einem Formwerkzeugteil besetzt werden können, welche nach Vollzug der (lösbaren) Verbindung beider Module eine ordnungsgemäße Zusammenarbeit als Formwerkzeug gewährleisten.

Die Variationsfähigkeit einer erfindungsgemäßen Anlage zum Spritzgießen von Kunststoffmaterial läßt sich noch dadurch erweitern, daß sowohl der Schließmodul als auch der Hubmodul der Schließvorrichtung ein eigenes Bett oder Gestell aufweisen, die eine vom Bett oder Gestell des Spritzaggregates bzw. der Plastifiziereinheit unabhängige Anordnung haben.

Vorgesehen ist nach der Erfindung aber auch noch, daß die Werkzeugträgerplatte bzw. der Formwerkzeugteil des Schließmoduls eine ortsfeste bzw. stationäre Anordnung erhalten sowie mit eingebauten Kraftmechanismen, z.B. hydraulischen Druckkissen bzw. Druckzylindern, versehen ist, die über Zuganker und Verriegelungsvorrichtungen mit der Werkzeugträgerplatte bzw. dem Formwerkzeugteil des Hubmoduls kuppelbar sind.

Es hat sich hierbei bewährt, wenn die Verriegelungsvorrichtungen an Querjochen sitzen, von denen jeweils eines mindestens zwei Zuganker an ihren freien Enden miteinander verbindet. Dabei kann ein Paar von (zwei) Querjochen entweder horizontal und im Abstand übereinander oder aber vertikal und im Abstand hintereinander vorgesehen werden.

Als wichtige Weiterbildungsmaßnahme hat sich bewährt, wenn die Querjoche an den Zugankern des Schließmoduls mit der Werkzeugträgerplatte bzw. dem Formwerkzeugteil des Hubmoduls über Einlaufschrägen und Gegenhalter miteinander in Eingriff bringbar sowie über Querkeile und/oder Querbolzen der Verriegelungsvorrichtungen miteinander kuppelbar sind.

Es kann ferner auch vorteilhaft sein, wenn die Werkzeugträgerplatte bzw. das Formwerkzeugteil des Hubmoduls auf dem Bett oder Gestell begrenzt längsverstellbar angeordnet ist und/oder das Hubmodul relativ zu seinem Bett oder Gestell eine begrenzt querverschiebbare Anordnung hat. Schließlich kann das Hubmodul relativ zu seinem Bett oder Gestell auch noch um eine Vertikalachse verdrehbar angeordnet sein, wobei der Verdrehwinkel vorteilhafterweise mindestens 180° betragen sollte. In diesem Falle können dem Hubmodul bzw. dessen Werkzeugträgerplatte zwei baugleiche Formwerkzeugteile so zugeordnet werden, daß sich wechselweise das eine oder das andere in Arbeitsposition befindet, während zugleich das andere oder das eine eine Freigabeposition einnimmt.

Es liegt ferner im Rahmen der Erfindung, eine Anordnung zu treffen, bei der das Hubmodul mit seinem Bett oder Gestell in Längsrichtung einer Führung, z.B. auf Schienen, läuft bzw. verschiebbar ist, so daß es auch über relativ lange Strecken leicht in den und aus dem Arbeitsbereich der Spritzgießanlage bewegt werden kann.

Auch läßt sich die Arbeitsweise der Spritzgießanlage dadurch optimieren, daß in die Werkzeugträgerplatte bzw. das Formwerkzeugteil des Hubmoduls eine Auswerfereinrichtung integriert ist.

Andere Weiterbildungsmaßnahmen der Erfindung liegen auch noch darin, daß das Bett oder Gestell des Schließmoduls mit dem Bett oder Gestell des Spritzaggregates bzw. der Plastifiziereinheit verbindbar ist und daß die Werkzeugträgerplatte bzw. die Formwerkzeughälfte des Hubmoduls auf dessen Bett oder Gestell durch einen Eigenantrieb verfahrbar ist.

Kurz zusammengefaßt hat der Erfindungsgegenstand folgende Wesensmerkmale:
- Die Spritzgießanlage für Kunststoffmaterial läßt sich in modularer Bauform aus einem Spritzaggregat bzw. einer Plastifiziereinheit sowie einem Schließmodul und einem Hubmodul der Schließvorrichtung für das Formwerkzeug erstellen.
- Der Schließmechanismus für die Schließeinheit befindet sich in der stationären Werkzeugträgerplatte bzw. dem stationären Formwerkzeugteil des Schließmoduls, wobei die Schließkraft über vier Zuganker auf zwei Querjoche übertragen wird, welche eine Verriegelungsvorrichtung für die Verbindung bzw. Kupplung mit dem Hubmodul enthalten.
- Der Hubmodul kann entsprechend den erforderlichen Entformungshüben für das Formwerkzeug hubmäßig so ausgelegt werden, daß er für das Formwerkzeug eine optimale Entformung bietet.
- Der Hubmodul läßt sich an den Schließmodul problemlos andocken und mit diesem über die Querjoche und die Verriegelungsvorrichtung kuppeln.
- Der Hubmodul kann ein eigenständiges Fahrzeug sein, welches sich bei Werkzeugwechsel komplett aus der Anlage herausfahren und durch einen anderen Hubmodul ersetzen läßt.
- Der Hubmodul kann im Aufbau aus einer Werkzeugträgerplatte mit integriertem oder aufgebautem Auswerfersystem bestehen oder aber selbst einen Teil des Formwerkzeuges bilden.
- Der Hubmodul kann eine bis zu 180° schwenkbare Vorrichtung enthalten, welche es möglich macht, auch zwei Formwerkzeugteile vorzusehen, so daß während des Entformens des Werkstücks an der einen Werkzeughälfte eine Produktions-Fortsetzung mit Hilfe der anderen Werkzeughälfte möglich ist.
- Der Hubmodul kann auch querverfahrbar vorgesehen sein und dadurch ein Entformen außerhalb der Spritzgießanlage bei kurzer Bauform der Gesamtanlage ermöglichen.
- Durch die Kombination von Schließmodul und Hubmodul zu einer Schließvorrichtung ergibt sich eine äußerst kurze und kompakte sowie auch formsteife Bauweise für die gesamte Spritzgießanlage, wobei die Schließvorrichtung selbst im wesentlichen nur von den beiden Modulen und den vier Zugankern gebildet ist.

In der Zeichnung ist der Gegenstand der Erfindung in Ausführungsbeispielen dargestellt. Es zeigen
- Figur 1: in schematisch vereinfachter Seitenansicht und teilweise im Schnitt eine Anlage zum Spritzgießen von Kunststoffmaterial bei betätigter Schließvorrichtung für das Formwerkzeug,
- Figur 2: die Spritzgießanlage nach Fig. 1 im geöffneten Zustand von Formwerkzeug und Schließvorrichtung, die
- Figuren 3 und 4: in einer der Fig. 2 entsprechenden Seitenansicht und in einer Draufsicht eine etwas abgewandelte Bauart einer Spritzgießanlage,
- Figur 5: in der Draufsicht eine wieder etwas abgewandelte Bauart einer Spritzgießanlage, die
- Figuren 6 und 7: in Seitenansicht und Draufsicht jeweils einen Ausschnittbereich aus den Fig. 3 und 4,
- Figur 8: eine der Fig. 7 entsprechende Draufsicht, jedoch in etwas abgewandelter Ausführung und
- Figur 9: eine der Fig. 6 ähnliche Seitenansicht, jedoch mit einer etwas anderen Zuordnung des Formwerkzeuges.

In der Zeichnung ist eine Spritzgießanlage 1 zur Verarbeitung von spritzgießfähigem Kunststoffmaterial dargestellt, die sich in jeder herkömmlichen Baugröße erstellen läßt, vorzugsweise jedoch als Großmaschine gebaut werden kann.

Diese Spritzgießanlage 1 besteht dabei aus dem eigentlichen Spritzaggregat bzw. der Plastifiziereinheit 2, dem von dieser aus mit dem Kunststoffmaterial beschickbaren Formwerkzeug 3 sowie aus der Schließvorrichtung 4, in die das Formwerkzeug 3 wechselweise öffen- und schließbar eingebaut wird.

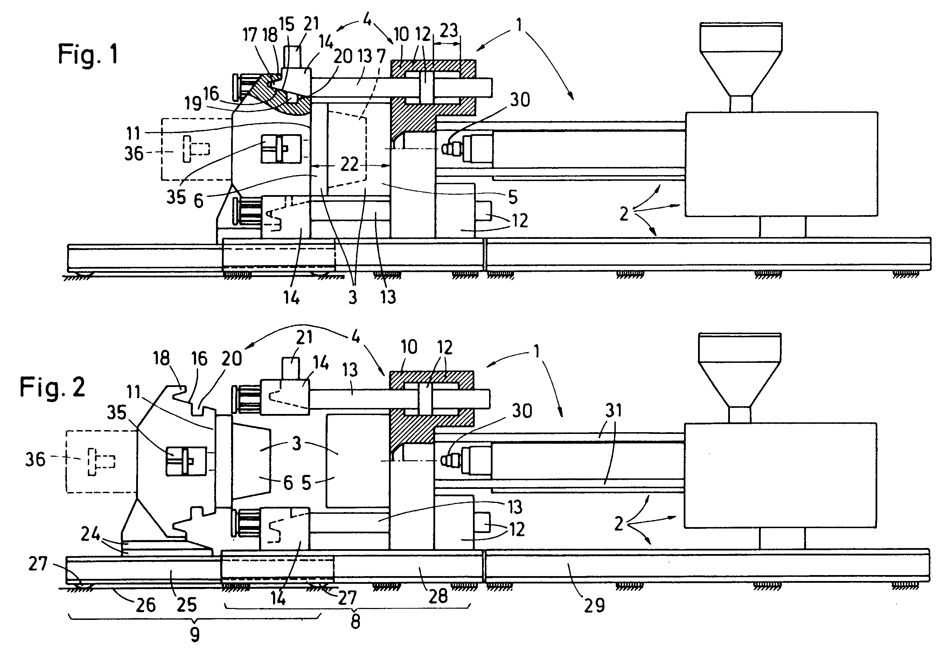

Als Formwerkzeug 3 arbeiten mindestens zwei Formwerkzeugteile 5 und 6 (Formwerkzeughälften) zusammen, die im Schließzustand, wie er in Fig. 1 zu sehen ist, eine Formhöhlung 7 zwischen sich eingrenzen, die vom Spritzaggregat bzw. der Plastifiziereinheit 2 aus mit dem spritzgießfähigen Kunststoffmaterial beschickt werden kann.

Die Besonderheit der Spritzgießanlage 1 liegt darin, daß einerseits die Schließvorrichtung 4 für das Formwerkzeug 3 relativ zum Spritzaggregat bzw. zur Plastifiziereinheit 2 sowie andererseits auch in sich selbst eine modulare Ausbildung bzw. Auslegung hat. Es bilden also nicht nur das Spritzaggregat bzw. die Plastifiziereinheit 2 und die Schließvorrichtung 4 jeweils einen eigenständigen Anlagenteil, sondern es setzt sich vielmehr die Schließvorrichtung 4 nochmals aus einem Schließmodul 8 und einem Hubmodul 9 zusammen, die miteinander - für die Spritzteilproduktion - in lösbare Verbindung gebracht werden können, um das wechselweise Schließen und Öffnen des bspw. aus den beiden Formwerkzeugteilen 5 und 6 bestehenden Formwerkzeuges 3 zu ermöglichen.

Nach der Zeichnung ist der Schließmodul 8 der Schließvorrichtung 4 mit einer ortsfesten bzw. stationären Werkzeugträgerplatte 10 versehen, während der Hubmodul 9 eine bewegliche Werkzeugträgerplatte 11 aufweist.

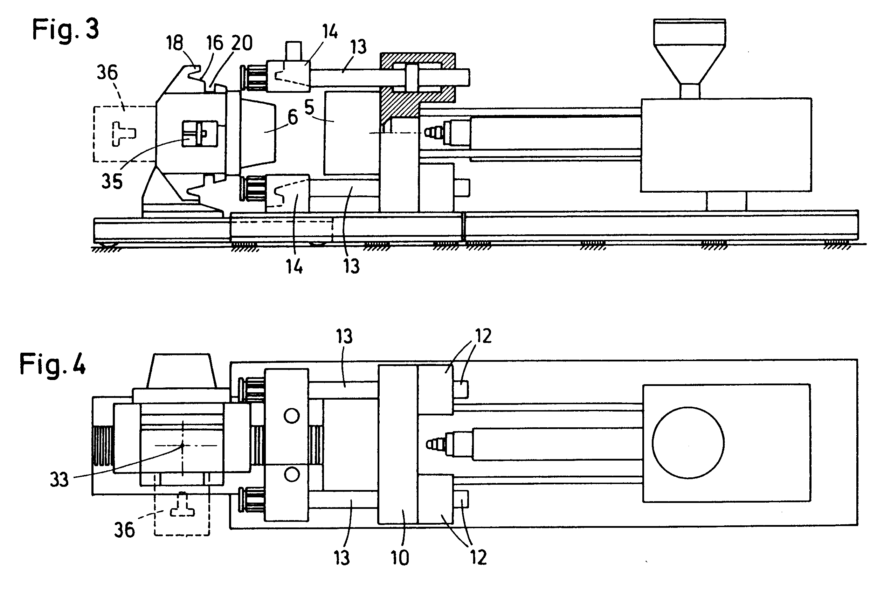

An der Innenseite der Werkzeugträgerplatte 10 läßt sich dabei das Formwerkzeugteil 5 befestigen, während die Innenseite der Werkzeugträgerplatte 11 das Formwerkzeugteil 6 trägt, wie das besonders deutlich aus den Fig. 2 und 3 erkennbar ist.

Damit der Schließmodul 8 und der Hubmodul 9 miteinander die auf das Formwerkzeug 3 einwirkende Schließvorrichtung 4 bilden können, sind in die stationäre bzw. ortsfeste Werkzeugträgerplatte 10 des Schließmoduls 8 mehrere, bspw. vier, hydraulische Druckkissen oder hydraulische Zylinder 12 integriert, von denen jedes bzw. jeder an einem Zuganker 13 angreift, der in Richtung zum Hubmodul 9 hin aus der Werkzeugträgerplatte 10 herausragt.

An ihren freien Enden sind jeweils zwei der als Holme gestalteten Zuganker 13 durch ein Querjoch 14 starr miteinander verbunden. Bei dem in der Zeichnung dargestellten Ausführungsbeispiel verbindet jeweils ein horizontales Querjoch 14 einerseits die beiden oberen Zuganker 13 und andererseits die beiden unteren Zuganker 13. Selbstverständlich ist es aber auch denkbar, vertikal ausgerichtete Querjoche 14 zu benutzen, wobei jeweils eines derselben einen oberen Zuganker 13 und einen unteren Zuganker 13 miteinander verbindet.

Über die Querjoche 14 der Zuganker 13 kann der Schließmodul 8 mit dem Hubmodul 9 gekuppelt werden. Hierzu kommen einerseits Einlaufschrägen 15 an den Querjochen 14 mit Einlaufschrägen 16 an der Werkzeugträgerplatte 11 in Wirkverbindung und andererseits wirken Gegenhalter 17 an den Jochen 14 auf Gegenhalter 18 an der Werkzeugträgerplatte 11 ein. Die eigentliche Kupplung zwischen den Querjochen 14 und der Werkzeugträgerplatte 11 wird dabei über Querkeile oder Querbolzen 19 herbeigeführt, die in dazu passende Nuten oder Bohrungen 20 einrücken.

Die Querkeile oder Querbolzen 19 sind über Antriebe 21, bspw. Druckzylinder, verschiebbar in den Querjochen 14 geführt, während sich die zugeordneten Nuten oder Bohrungen 20 in der Werkzeugträgerplatte 11 des Hubmoduls 9 befinden.

Ein wesentliches Ausbildungskriterium des Schließmoduls 8 liegt darin, daß die als Kraftmechanismen in seine stationäre bzw. ortsfeste Werkzeugträgerplatte 10 integrierten Druckkissen bzw. Druckzylinder 12 eine Auslegung haben, die eine Anpassung an unterschiedliche Einbauhöhen 22 verschiedener Formwerkzeuge 3 ermöglicht. Sie lassen einen sogenannten Voreinstellhub 23 zu, welcher jeweils beim erstmaligen Schließen des Formwerkzeuges 3 wirksam wird und dann während des nachfolgenden Arbeitsbetriebes in der voreingestellten, fixen Position verbleibt. Dies kann durch eine hydraulische Einspannung bewirkt werden. Zur Hervorbringung der Schließkraft für das in Schließlage befindliche Formwerkzeug 3 ist es dann lediglich notwendig, die als Kraftmechanismen dienenden hydraulischen Druckkissen bzw. Zylinder 12 mit dem entsprechenden Druck zu beaufschlagen, der dann über die Zuganker bzw. Holme 13, die Querjoche 14 sowie die aus den Querkeilen oder -bolzen 19 und den Nuten oder Bohrungen 20 bestehenden Verriegelungsvorrichtungen auf die Werkzeugträgerplatte 11 des Hubmoduls 9 übertragen wird.

Die eigentliche Öffnungs- und Schließbewegung für das Formwerkzeug 3 wird allein mit dem Hubmodul 9 ausgeführt, nachdem bzw. während die aus den Querkeilen oder -bolzen 19, den zugehörigen Antrieben 21 sowie den Nuten oder Bohrungen 20 bestehenden Verriegelungsvorrichtungen ausgerückt sind. Zu diesem Zweck ist die Werkzeugtragerplatte 11 des Hubmoduls 9 über eine Führungseinrichtung 24 auf einem Bett oder Gestell 25 des Hubmoduls 9 längsverstellbar angeordnet, und zwar vorzugsweise mittels eines geeigneten Antriebs, welcher der Einfachheit halber in der Zeichnung nicht gezeigt ist.

Zum gleichen Zweck ist es aber auch denkbar, den Hubmodul 9 insgesamt, also zusammen mit seinem Bett oder Gestell 25 in Längsrichtung auf einer ortsfesten Führung 26, z.B. Schienen, laufen zu lassen bzw. verschiebbar zu machen. Hierzu wäre dann das Bett oder Gestell 25 mit Laufrädern oder Gleitern 27 auszurüsten.

Als weiteres wesentliches Ausbildungskriterium der Spritzgießanlage 1 tritt in Erscheinung, daß zur Bildung der Schließvorrichtung 4 für das Formwerkzeug 3 ein Schließmodul 8 und ein Hubmodul 9 als eigenständige Funktionseinheiten miteinander in Wirkverbindung gebracht werden, wobei auch der Schließmodul 8 von einem Bett oder Gestell 28 getragen wird. Dieses Bett oder Gestell 28 ist dabei ortsfest, bspw. auf einem Fundament, montiert und kann mit einem ebenfalls ortsfest montierten Bett oder Gestell 29 in Verbindung gebracht werden, auf dem das Spritzaggregat bzw. die Plastifiziereinheit 2 angeordnet ist.

Das Spritzaggregat bzw. die Plastifiziereinheit 2 kann dabei auf dem Bett oder Gestell 29 begrenzt verschoben werden, damit es sich über seine Spritzdüse 30 durch die stationäre bzw. ortsfeste Werkzeugträgerplatte 10 des Schließmoduls 8 mit dem Formwerkzeug 3 in und außer Wirkverbindung bringen läßt. Zu diesem Zweck ist das Spritzaggregat bzw. die Plastifiziereinheit 2 zusätzlich noch über Führungsholme 31 an die stationäre bzw. ortsfeste Werkzeugträgerplatte 10 des Schließmoduls 8 angeschlossen.

In den meisten Fällen reicht es für den ordnungsgemäßen Betrieb einer Spritzgießanlage 1 aus, wenn zum Öffnen und Schließen des Formwerkzeuges 3 die bewegliche Werkzeugträgerplatte 11 des Hubmoduls 9 sich relativ zur stationären bzw. ortsfesten Werkzeugträgerplatte 10 des Schließmoduls zwischen der Schließlage nach Fig. 1 und der Öffnungslage nach Fig. 2, insbesondere mit Hilfe der antriebsfähigen Führungseinrichtung 24, verfahren läßt. In der Öffnungslage nach Fig. 2 kann dann das Spritzteil von dem Formwerkzeugteil 6 entformt werden.

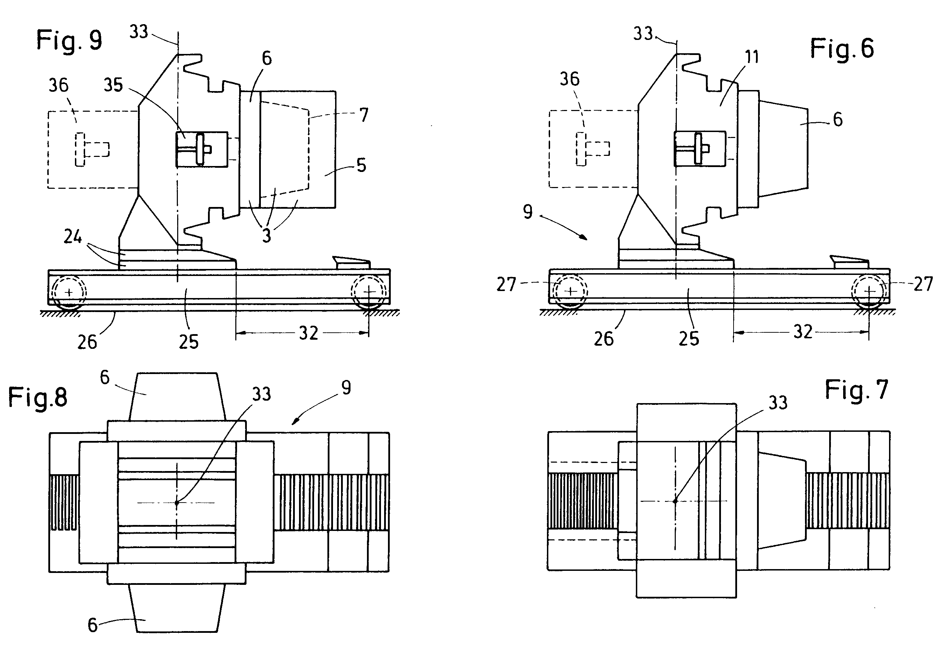

Bei in einer vorbestimmten Ruhelage auf der Führung 26 fixiertem Bett oder Gestell 25 ist zum Zwecke des Öffnens und Schließens des Formwerkzeuges 3 die Werkzeugträgerplatte 11 des Hubmoduls 9 mittels der Führungseinrichtung 24 um den Hubweg 32 auf dem Bett oder Gestell 25 verlagerbar, wie er jeweils in den Fig. 6 und 9 der Zeichnung angedeutet ist.

In manchen Fällen ist es jedoch vorteilhaft, wenn nach dem Öffnen des Formwerkzeuges 3 das Entformen des Werkstücks vom Formwerkzeugteil 6 außerhalb der Längsachse der Schließvorrichtung 4 vorgenommen werden kann. Deshalb ist bei der Spritzgießanlage 1 nach den Fig. 3 und 4 ein Hubmodul 9 vorgesehen, bei dem sich die bewegliche Werkzeugträgerplatte 11 nicht nur mit Hilfe der Führungseinrichtung 24 um den Hubweg 32 in Längsrichtung auf dem Bett oder Gestell 25 verlagern läßt. Vielmehr ist dort die Führungseinrichtung 24 so ausgestaltet, daß sich die Werkzeugträgerplatte 11 auf ihr auch noch um eine Vertikalachse 33 winkelverdrehen läßt, die zusätzlich noch in den Fig. 6 bis 9 der Zeichnung gezeigt wird.

Wie die Fig. 4, 6 und 7 erkennen lassen, reicht es im Grunde genommen für das Entformen der Werkstücke ohne weiteres aus, wenn die Werkzeugträgerplatte 11 mit dem Formwerkzeugteil 6 aus ihrer Arbeitsstellung um 90° verdreht werden kann, so daß das Formwerkzeugteil 6 von einer Längsseite der Spritzgießanlage 1 aus zugänglich ist (Fig. 4).

Als besondere vorteilhaft hat sich jedoch die Möglichkeit herausgestellt, für die Werkzeugträgerplatte 11 des Hubmoduls 9 eine 180°-Drehung um die Vertikalachse 33 vorzusehen. Es kann dann nämlich die Werkzeugträgerplatte 11 an zwei voneinander abgewendeten Seiten jeweils mit einem Formwerkzeugteil 6 besetzt werden. Die beiden Formwerkzeugteile 6 lassen sich in diesem Falle wechselseitig mit dem stationären Formwerkzeugteil 5 zu einem Formwerkzeug 3 schließen, während zugleich am jeweils anderen Formwerkzeugteil 6 die Entformung des Werkstückes vorgenommen werden kann. Die Arbeitsweise der Spritzgießanlage 1 läßt sich damit durch eine Anordnung, wie sie in Fig. 8 der Zeichnung gezeigt ist, optimieren.

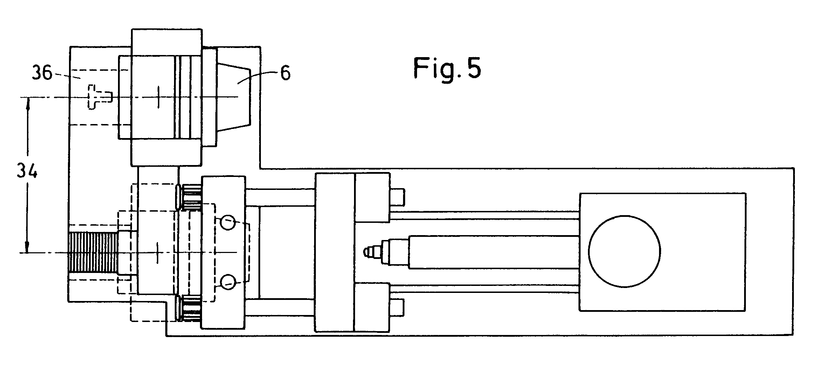

In Fig. 5 der Zeichnung ist noch zu sehen, daß auch die Möglichkeit besteht, den Hubmodul 9 der Spritzgießanlage 1 so zu gestalten, daß sich die bewegliche Werkzeugträgerplatte 11 nach dem mit Hilfe der Führungseinrichtung 24 erfolgten Öffnen des Formwerkzeugs 3 quer zur Längsachse der Spritzgießanlage 1 auf dem Bett oder Gestell 25 um ein begrenztes Maß 34 ausfahren läßt. Auch hierdurch kann das Entformen des Werkstückes vom Formwerkzeugteil 6 seitlich neben der eigentlichen Spritzgießanlage 1 erleichtert werden. Wenn also für das seitliche Ausfahren der beweglichen Werkzeugträgerplatte 11 in Breitenrichtung der Spritzgießanlage 1 genügend Raum verfügbar ist, kann dadurch eine Verminderung der Baulänge für die gesamte Spritzgießanlage 1 erreicht werden.

Eine optimale Anpassungsfähigkeit der Spritzgießanlage 1 und insbesondere der Schließvorrichtung 4 an unterschiedliche Bedürfnisse wird dadurch erreicht, daß der Hubmodul 9 sich insgesamt mit Hilfe seines Bettes oder Gestelles 25 auf ortsfesten Führungen 26, bspw. Schienen, über weite Strecken relativ zur Spritzgießanlage 1 verlagern läßt. Hierdurch ist die Möglichkeit gegeben, mit ein und demselben Schließmodul 8 mehrere unterschiedliche Hubmodule 9 zusammenarbeiten zu lassen und diese dann jeweils bedarfsgerecht einzusetzen.

Während der Schließmodul 8 dem Spritzaggregat bzw. der Plastifiziereinheit 2 in einer vorbestimmten Bauart zugeordnet wird, lassen sich ihm zur Bildung der Schließvorrichtung 4 für ein Formwerkzeug 3 unterschiedlichste Hubmodule 9 zuordnen. Das hat zur Folge, daß in weiten Grenzen variierbare Schließvorrichtungen 4 geschaffen werden können, die sich vielen vorkommenden Bedürfnissen optimal anpassen lassen.

Hervorzuheben ist des weiteren, daß Auswerfersysteme 35 für die Werkstücke in die Werkzeugträgerplatte 11 des Hubmoduls 9 integriert werden können und folglich mit dem an dieser befindlichen Formwerkzeugteil 6 zusammenarbeiten. Es ist aber auch möglich, Auswerfer- bzw. Entformungssysteme 36 an der Rückseite der Werkzeugträgerplatte 11 zu adaptieren, wie das in den Fig. 2 bis 7 und 9 der Zeichnung jeweils durch gestrichelte Linien angedeutet ist. Eine solche Adaption von Auswerfer- bzw. Entformungssystemen 36 ist jedoch dann nicht möglich, wenn die Werkzeugträgerplatte 11 an voneinander abgewendeten Seiten jeweils einen Formwerkzeugteil 6 trägt, wie das Fig. 8 wiedergibt. In diesem Falle wäre der Einbau von Auswerfersystemen 35 in die Werkzeugträgerplatte 11 notwendig.

Endlich ist noch darauf hinzuweisen, daß der modulare Aufbau der Schließvorrichtung 4, also deren Unterteilung in einen Schließmodul 8 und einen Hubmodul 9, auch die Möglichkeit schafft, zumindest am Hubmodul 9 die Werkzeugträgerplatte 11 selbst als Formwerkzeugteil 6 zu gestalten und dieses dann zur Bildung des Formwerkzeugs 3 mit dem Formwerkzeugteil 5 zusammenwirken zu lassen. In diesem Falle müßte jedoch der Formwerkzeugteil 6 so stabil ausgeführt werden, daß er selbst der Durchbiegung des Werkzeuginnendruckes standhält. Hierzu könnten sich dann an der Rückseite des Formwerkzeugteils 6 besondere Abstützbrücken gegen Durchbiegung befinden. Auch müßte dann das Formwerkzeugteil 6 selbst mit den Einlaufschrägen 16 und den Gegenhaltern 18 sowie mit den Nuten oder Bohrungen 20 ausgestattet werden, um das Zusammenwirken mit den Querjochen 14 des Schließmoduls 8 zu ermöglichen.

Das Formwerkzeugteil 6 wäre in diesem Falle auf der Führungseinrichtung 24 zu montieren und mit deren Hilfe gegenüber dem Bett oder Gestell 25 um den Hubweg 32 verfahrbar.

Wie Fig. 9 zeigt, kann in einem solchen Falle der Hubmodul 9 den gesamten Werkzeugwechsel bewirken, indem mit dem Formwerkzeugteil 6 auch der Formwerkzeugteil 5 gekuppelt und dann der Hubmodul 9 mit Hilfe seines Bettes oder Gestells 25 längs der Führung 26 ausgefahren wird.

Der vorstehend erläuterte, modulare Aufbau einer Spritzgießanlage 1 ermöglicht eine Automatisierungskonzeption, die mit besonderen Entformungshilfen, wie Robotern oder Stapelvorrichtungen kostengünstig und funktionssicher realisiert werden kann.

## Patentansprüche

1. Anlage zum Spritzgießen von Kunststoffmaterial, bei der ein Spritzaggregat bzw. eine Plastifiziereinheit an ein Formwerkzeug anlegbar ist, dessen Formhöhlung zwischen mindestens zwei Formwerkzeugteilen eingegrenzt ist, die öffen- und schließbar in einer Schließvorrichtung sitzen, welche von einer ortsfesten bzw. stationären Werkzeugträgerplatte und einer beweglichen Werkzeugträgerplatte gebildet ist, die zur Schließkrafterzeugung durch Kraftantrieb gegeneinander verspannbar sind,
**dadurch gekennzeichnet,**
daß die Schließvorrichtung (4) einerseits relativ zum Spritzaggregat bzw. zur Plastifiziereinheit (2) sowie andererseits in sich selbst eine modulare Ausbildung bzw. Auslegung (8, 9) aufweist,
und daß dabei die Schließvorrichtung (4) aus einem Schließmodul (8) und einem Hubmodul (9) besteht, die miteinander in lösbare Verbindung bringbar sind (13 bis 21).

2. Anlage nach Anspruch 1,
**dadurch gekennzeichnet,**
daß sowohl der Schließmodul (8) als auch der Hubmodul (9) der Schließvorrichtung (4) jeweils mit einer Werkzeugträgerplatte (10 bzw. 11) versehen und/oder mit einem Formwerkzeugteil (5 bzw. 6) besetzt ist.

3. Anlage nach einem der Ansprüche 1 und 2,
**dadurch gekennzeichnet,**
daß sowohl der Schließmodul (8) als auch der Hubmodul (9) der Schließvorrichtung (4) ein eigenes Bett oder Gestell (28 bzw. 25) aufweist und eine vom Bett oder Gestell (29) des Spritzaggregates bzw. der Plastifiziereinheit (2) unabhängige Anordnung hat.

4. Anlage nach einem der Ansprüche 1 bis 3,
**dadurch gekennzeichnet,**
daß die Werkzeugträgerplatte (10) bzw. der Formwerkzeugteil (5) des Schließmoduls (8) eine ortsfeste bzw. stationäre Anordnung hat sowie mit eingebauten Kraftmechanismen (12), z.B. hydraulischen Druckkissen bzw. Druckzylindern, versehen ist, die über Zuganker (13) und Verriegelungsvorrichtungen (14 bis 21) mit der Werkzeugträgerplatte (11) bzw. dem Formwerkzeugteil (6) des Hubmoduls (9) kuppelbar sind.

5. Anlage nach Anspruch 4,
**dadurch gekennzeichnet,**
daß die Verriegelungsvorrichtungen (15 bis 21) an Querjochen (14) sitzen, von denen jeweils eines mindestens zwei Zuganker (13) an ihren freien Enden miteinander verbindet.

6. Anlage nach Anspruch 5,
**dadurch gekennzeichnet,**
daß ein Paar von Querjochen (14) entweder horizontal und im Abstand übereinander oder aber vertikal und im Abstand hintereinander vorgesehen sind.

7. Anlage nach einem der Ansprüche 5 und 6,
**dadurch gekennzeichnet,**
daß die Querjoche (14) an den Zugankern (13) des Schließmoduls (8) mit der Werkzeugträgerplatte (11) bzw. der Werkzeughälfte (6) des Hubmoduls (9) über Einlaufschrägen (15, 16) und Gegenhalter (17, 18) miteinander in Eingriff bringbar sowie über Querkeile und/oder Querbolzen (19) der Verriegelungsvorrichtungen miteinander kuppelbar sind (20).

8. Anlage nach einem der Ansprüche 1 bis 7,
**dadurch gekennzeichnet,**
daß die Werkzeugträgerplatte (11) bzw. das Formwerkzeugteil (6) des Hubmoduls (9) auf dem Bett oder Gestell (25) begrenzt längsverstellbar (24, 32) angeordnet ist.

9. Anlage nach einem der Ansprüche 1 bis 8,
**dadurch gekennzeichnet,**
daß der Hubmodul (9) relativ zu seinem Bett oder Gestell (25) begrenzt querverschiebbar (34) angeordnet ist (Fig. 5).

10. Anlage nach einem der Ansprüche 1 bis 8,
**dadurch gekennzeichnet,**
daß der Hubmodul (9) relativ zu seinem Bett oder Gestell (25) um eine Vertikalachse (33) winkelverdrehbar angeordnet ist (Fig. 4 und 6 bis 9).

11. Anlage nach einem der Ansprüche 1 bis 10,
**dadurch gekennzeichnet,**
daß der Hubmodul (9) mit seinem Bett oder Gestell (25) in Längsrichtung auf einer Führung (26), z.B. Schienen, läuft bzw. verschiebbar ist (Fig. 1, 2, 6 und 9).

12. Anlage nach einem der Ansprüche 1 bis 11,
**dadurch gekennzeichnet,**
daß in die Werkzeugträgerplatte (11) bzw. das Formwerkzeugteil (6) des Hubmoduls (9) eine Auswerfereinrichtung (35) integriert oder aber ein Auswerfer- bzw. Entformungssystem (36) adaptiert ist.

13. Anlage nach einem der Ansprüche 1 bis 12,
**dadurch gekennzeichnet,**
daß das Bett oder Gestell (28) des Schließmoduls (8) mit dem Bett oder Gestell (29) des Spritzaggregates bzw. der Plastifiziereinheit (2) verbindbar ist.

14. Anlage nach einem der Ansprüche 1 bis 13,
**dadurch gekennzeichnet,**
daß die Werkzeugträgerplatte (11) bzw. das Formwerkzeugteil (6) des Hubmoduls (9) auf dem Bett oder Gestell (25) durch einen Eigenantrieb verfahrbar ist (24).
